# EUROPEAN PATENT SPECIFICATION

(11) **EP 3 397 877 B1**
(45) Date of publication and mention of the grant of the patent: **15.12.2021**
(21) Application number: 16826009.9
(22) Date of filing: 29.12.2016
(51) Int. Cl.: F16G 5/16, C21D 1/78

(54) **METHOD FOR MANUFACTURING STEEL TRANSVERSE ELEMENTS FOR A DRIVE BELT FOR A CONTINUOUSLY VARIABLE TRANSMISSION**
VERFAHREN ZUR HERSTELLUNG EINES QUERSTAHLSEGMENTS FÜR EINEN ANTRIEBSRIEMEN FÜR EIN STUFENLOSES GETRIEBE
PROCÉDÉ DE FABRICATION D'ÉLÉMENTS TRANSVERSAUX EN ACIER POUR COURROIE D'ENTRAÎNEMENT D'UNE TRANSMISSION À VARIATION CONTINUE

(30) Priority: 30.12.2015 NL 1041655
(43) Date of publication of application: 07.11.2018
(73) Proprietor: Robert Bosch GmbH, 70442 Stuttgart (DE)
(72) Inventor: HUYSMANS, Ludovic Peter Willem, 3910 Neerpelt (BE); LENDERINK, Jan Willem, 5000AM Tilburg (NL); CREBOLDER, Cornelia, Adriana, Elizabeth, 4706WG Roosendaal (NL)
(74) Representative: Plevier, Gabriël Anton Johan Maria
(86) International application number: PCT/EP2016/025192
(87) International publication number: WO 2017/114599

(56) References cited:
- WO-A1-2009/084946
- WO-A1-2010/062167
- US-A- 3 692 591
- US-A- 4 637 844

## Description

The present disclosure relates to a method for manufacturing transverse elements made from steel, in particular to a method for the batch wise heat treatment thereof, which transverse elements are applied in a drive belt in an essentially continuous row filling the circumference of an endless, i.e. ring shaped carrier of the drive belt. These transverse elements and the drive belt, as well as the continuously variable transmission wherein there are typically applied are well known in the art, for example from the European patent publications EP-A-0 626 526 and EP-A-1 167 829 respectively.

In the transmission, the transverse elements of the drive belt arrive in friction contact with two pulleys and can transmit a driving force from the one transmission pulley by a first transverse element exerting a pushing force on a second, adjacent transverse element, which second transverse element exerts such pushing force onto a third transverse element and so on. The endless carrier of the drive belt mainly serves to constrain and guide the transverse elements in their trajectory around and in-between the said pulleys. Typically, the endless tensile element is composed of two sets of a number of mutually nested, i.e. radially stacked flexible metal rings. Typically also, the transverse elements each define two slots that respectively open towards a respective lateral side of the respective transverse elements and that respectively accommodate a part of a respective one of the two ring sets. Also on each lateral side thereof, the transverse elements are provided with a respective one of two contact faces thereof, which contact faces are mutually oriented at an angle that essentially matches an angle defined between two, mutually opposing conical discs of each transmission pulley.

The design of the known transverse elements is largely optimized in terms of the stress levels and stress amplitudes that occur during operation, i.e. rotation of the drive belt, e.g. due to the intermittent axial compression of the transverse elements by and between the discs of the pulleys, as well as the varying pushing force between adjacent transverse elements. Also, the manufacturing process of the transverse elements is largely optimized for this purpose. For example, the transverse elements are hardened by the heat treatment of quench hardening that includes the three well-known stages of austenitizing, quenching and tempering, such as is discussed in WO 2009/084946.

According to the present disclosure, the metallurgical and/or geometrical characteristics of the transverse elements, such as the fatigue strength thereof, can be favorably improved further, by the modification of the known quench hardening heat treatment that is defined in claim 1 hereinafter. In particular according to the present disclosure and prior to the austenitizing stage, a number of transverse elements are preheated (from room temperature) to a temperature close to, but still below the austenite phase formation temperature of the steel in question, e.g. between 20 to 75 degrees below such temperature. As a result thereof, when the temperature of the transverse elements is raised further in the austenitizing stage of the quench hardening heat treatment, i.e. to effect the desired phase transformation from ferrite to austenite, the still required temperature increase is small and will occur quickly throughout all of the transverse elements present. Thus, the said phase transformation occurs with a minimal time delay between the surface and the core of the transverse elements.

The technical benefit of such novel quench hardening heat treatment can be understood as follows. Underlying the present disclosure is the discovery that by suppressing the dissolution of iron carbide particles (e.g. Fe₃C, FeₓCr_{y}C), which normally occurs to a considerable extent in austenitizing, the fatigue strength of the transverse elements could surprisingly be favorably improved. Such iron carbides are present throughout the steel matrix of the basic material, but dissolve and generate interstitial carbon atoms at elevated temperature, such as is applied during austenitizing. Therefore, by minimizing the process time of the austenitizing stage of the quench hardening in the presently claimed manner, also the dissolution of iron carbides is reduced, as desired. In this latter respect it is noted that, conventionally, the dissolution of iron carbides is aimed for in the hardening process, because the dissolved carbon stabilizes the martensitic phase after quenching and provides additional hardness to the steel.

It is noted that the process(-ing) time required for the phase transformation depends on the batch size of transverse elements that are being austenitized simultaneously. Indeed, since a single drive belt already includes several hundred transverse elements, any practically applicable and/or commercially viable arrangements of the quench hardening heat treatment must provide for the processing of transverse elements in bulk. In practice, several hundred to several thousand transverse elements are heat treated together, i.e. batch-wise, piled into a heat treatment basket. Obviously, also the core material of the transverse elements located in the middle of a stack or pile transverse elements contained in the heat treatment basket must be austenitized and a sufficient process time must thus be allowed for this. By pre-heating a batch of transverse elements to be austenitized, the process time of the actual austenitizing phase, i.e. the process time required for the phase transformation from ferrite to austenite of all transverse elements in the batch, is reduced. As a result, the dissolution of iron carbides is favorably reduced and/or made more consistent throughout the transverse elements in the batch.

It is further noted that US 3 692 591 A discloses the pre-heating of steel parts to just below the austenite phase formation temperature in quench hardening, however, specifically for enhancing grainsize refinement in cyclic-rapid austenitizing of heavy plate sections, tubing and various other massive structures. Also US 4 637 844 A discloses the pre-heating of parts prior to austenitizing. In this case, however, to a temperature below the pearlite transformation temperature and specifically as part of the heat treatment of austempering the exterior surface of cast ferrous parts."As a possible further measure, but for realizing the same effect of reducing the dissolution of iron carbides during the austenitizing stage of the quench hardening, austenitizing is carried out at a relatively low temperature of only 25 to 100 degrees Centigrade above the ferrite to austenite transformation temperature of the steel in question. For example, in case of the commonly applied 75Cr1 (DIN 1.2003 steel) base material for the transverse elements, a suitable austenitizing process temperature is chosen in a range from 800 to 850 degrees Celsius, more in particular in-between 820 and 840 °C. Additionally for realizing the same effect of reducing the dissolution of iron carbides during the austenitizing stage of the quench hardening, austenitizing is carried out for a minimal period of time, i.e. just long enough to complete ferrite to austenite transformation for all transverse elements in the batch. In this latter respect, in case of the commonly applied 75Cr1 base material, a suitable duration of the austenitizing stage is chosen in a range from 5 to 15 minutes.

As a possible further measure, in particular for further improving the fatigue strength of the transverse elements, the said austenitizing stage of the quench hardening is carried out in an atmosphere with an excess of carbon relative to the carbon content in % by weight- of the steel in question of the transverse elements. This particular process is known in the art as carburizing.

According to the present disclosure, a carbon potential of the process gas in the austenitizing stage is set anywhere between 15 and 25% and preferably around 20% above such carbon content. For example, in case of the commonly applied 75Cr1 (DIN 1.2003 steel) base material for the transverse elements, the desired carbon potential of the process gas in the austenitizing stage can be set by a carbon monoxide concentration in the process atmosphere is chosen in a range from 16 to 22 vol.-% with balance (i.e. 84 to 78 vol.-%) nitrogen gas. Hereby, carbon atoms are introduced in a surface layer of the transverse elements is enriched with carbon atoms, whereby the surface hardness increases. Of course, also other gasses can be used as a source for carbon, such as natural gas, propane or acetylene.

According to the present disclosure, such additional hardness favorably improves the wear resistance of the transverse element. Additionally, by both introducing additional carbon atoms into the surface material of the transverse element and largely avoiding the dissolution of iron carbides therein in the austenitizing stage, the transverse elements are not only provided with a hard and wear resistant surface, but favorably also with a noticeable gradient in the concentration of dissolved carbon, which concentration reduces from the surface towards the core of the transverse elements in a thin surface layer of ten to several tens of microns. Whereas such carbon concentration gradient is not necessarily sought after in a conventional austenitizing or carburizing processes, in the case of the transverse element - and if controlled appropriately- it was found to improve the fatigue strength thereof by effecting a compressive residual stress in a surface layer of the transverse element. A suitable value of the compressive residual stress has a value in the range between negative 30 and negative 80 N/mm², e.g. around -50 N/mm².

This latter fatigue strength improvement is unexpected, since a compressive residual stress of similar magnitude and effect is generally already realized with the known stone tumbling process. However, according to the present disclosure, the stones applied in stone tumbling are generally too big for easily entering inside the slot of the transverse elements. Therefore, the surface parts of the transverse element that define the slot are impacted by the tumbling stones to a lesser extent than other surface parts thereof and hardly any compressive residual stress is generated therein in the stone tumbling process. In particular in these latter surface parts, the said gradient in the concentration of dissolved carbon in accordance with the present disclosure generates an advantageous compressive residual stress nonetheless.

It is noted that both the said carbon concentration gradient and the said residual stress level cannot be easily measured directly, at least not with high accuracy. However, it is possible to link the said (local) concentration of dissolved carbon to the (local) hardness of the transverse element, i.e. of the steel whereof it is made. In particular, a change in the carbon concentration can be related to a measured change in the hardness value of the steel. Within the context of the present disclosure, a suitable difference of the hardness of the transverse element at its surface and at its core amounts to at least 60 HV0.1 (i.e. so-called Vickers hardness measured with a 100 gram weight applied) and in particular has a value in the range between 60 and 90 HV0.1 , more in particular amounts to around 75 HV0.1.

It is further noted that the process of enriching the surface material of a steel work piece with carbon from an external source is as such known, in particular by the name of carburizing. In the carburizing process, the work piece is austenitized under a gas atmosphere including a carbon containing endo(-thermic) gas such as carbon-monoxide. Typically, the carbon potential of the gas atmosphere is controlled to a value considerably above the carbon potential of the work piece in question for realizing a highly effective carburization in a short time. In such known carburizing process a concentration gradient of dissolved carbon will thus be created by the introduction of carbon atoms into the surface layer from the process gas atmosphere. However, according to the technical insights underlying the present disclosure, this latter phenomenon is not relevant for and/or is hardly noticeable even in view of the considerable amount of carbon that is released into the microstructure by the said dissolution of the iron carbide particles. Therefore, the known concentration gradient can be considered insignificant and, in particular, does not provide the surface layer with the compressive residual stress that is aimed for by the present disclosure.

The above discussed principles and features of the novel transverse element and its proposed manufacturing method will now be elucidated further along a drawing in which:
Figure 1 provides a schematically depicted example of the well-known continuously variable transmission provided with two pulleys and a drive belt;
Figure 2 provides a schematically depicted cross-section of the known drive belt incorporating steel transverse elements and a tensile element;
Figure 3 schematically indicates the three stages of a conventional quench hardening heat treatment that is applied as part of the overall manufacturing method of the transverse element;
Figure 4 is a graph of a temperature profile that is applied in the conventional quench hardening heat treatment;
Figure 5 is a graph illustrating the novel quench hardening process in accordance with the present disclosure, in particular representing the temperature profile that is applied therein;
Figure 6 schematically illustrates the effect of a conventional carburizing heat treatment on the crystal structure of the transverse element; and
Figure 7 schematically illustrates the relevant aspect of the crystalline structure of a novel transverse element in accordance with the present disclosure.

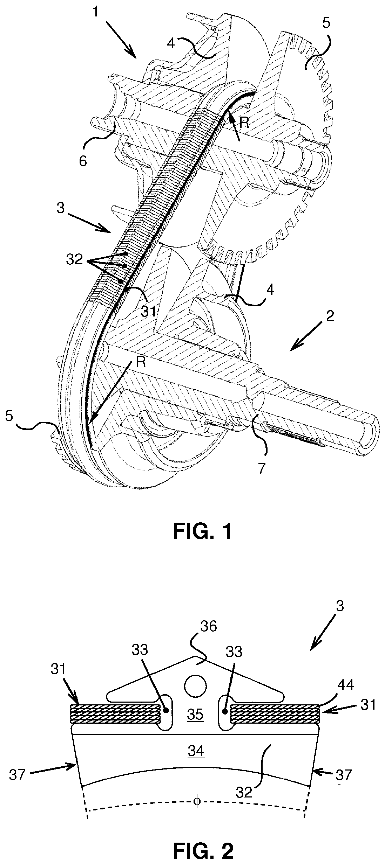

Figure 1 shows the central parts of a known continuously variable transmission or CVT that is commonly applied in the drive-line of motor vehicles between the engine and the driven wheels thereof. The transmission comprises two pulleys 1, 2 that are each provided with a pair of conical pulley discs 4, 5 mounted on a pulley shaft 6 or 7, between which pulley discs 4, 5 a predominantly V-shaped circumferential pulley groove is defined. At least one pulley disc 4 of each pair of pulley discs 4, 5, i.e. of each pulley 1, 2, is axially moveable along the pulley shaft 6, 7 of the respective pulley 1, 2. A drive belt 3 is wrapped around the pulleys 1, 2, located in the pulley grooves thereof for transmitting a rotational movement and an accompanying torque between the pulley shafts 6, 7.

The transmission generally also comprises activation means that -during operation-impose on the said axially moveable pulley disc 4 of each pulley 1, 2 an axially oriented clamping force that is directed towards the respective other pulley disc 5 of that pulley 1, 2, such that the drive belt 3 is clamped between these discs 4, 5 of the pulleys 1, 2. These clamping forces not only determine a friction force between the drive belt 3 and the respective pulleys 1, 2, but also a radial position R of the drive belt 3 at each pulley 1, 2 between the pulley discs 4, 5 thereof, which radial position(s) R determine a speed ratio of the transmission between the pulley shafts 6, 7 thereof.

An example of a known drive belt 3 is shown in more detail in figure 2, in a cross-section thereof facing in its circumference direction. The drive belt 3 incorporates an endless tensile element 31 in the form of two sets of flat and thin, i.e. of ribbon-like, flexible metal rings 44. The drive belt 3 further comprises a number of transverse elements 32 that are mounted on the tensile element 31 along the circumference thereof. In this particular example, each set of rings 44 is received in a respective recess or slot 33 defined by the transverse elements 32 on either lateral side thereof, i.e. on either axial side of a central part 35 of the transverse elements 32. The slots 33 of the transverse element 32 are located in-between a bottom part 34 and a top part 36 of the transverse element 32, as seen in radial direction relative to the drive belt 3 as a whole.

On the axial sides of the said bottom part 34 thereof, the transverse elements 32 are provided with contact faces 37 for arriving in friction contact with the pulley discs 4, 5. The contact faces 37 of each transverse element 32 are mutually oriented at an angle φ that essentially matches an angle of the V-shaped pulley grooves. Thus, the transverse elements 32 take-up the said clamping force, such that when an input torque is exerted on the so-called driving pulley 1, friction between the discs 4, 5 and the belt 3 causes a rotation of the driving pulley 1 to be transferred to the so-called driven pulley 2 via the likewise rotating drive belt 3 or vice versa.

During operation in the CVT the transverse element 32 components of the drive belt 3 are intermittently clamped between the respective pairs of pulley discs 4, 5 of the pulleys 1, 2. Although such clamping obviously results in a compression of the bottom part 34 of the transverse elements 32, tensile forces are generated therein as well, in particular in a transition region between the bottom part 34 and the central part 35 thereof. Thus, the transverse elements 32 are not only subjected to wear, but due the said intermittent clamping thereof also to metal fatigue loading.

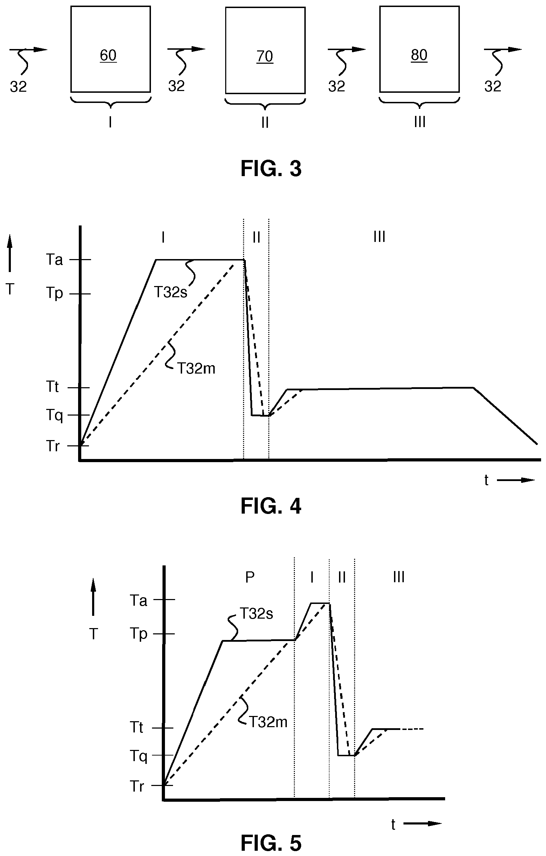

It is well-known and generally applied to manufacture the transverse elements 32 from steel, such as 75Cr1 (DIN 1.2003) steel, and to quench harden the steel as part of the overall production process of the drive belt 3. The conventional process step of quench hardening comprises three stages I, II and III that are schematically illustrated in figure 3. In stage I a batch of the (possibly only partially) pre-cut transverse elements 32 are heated in an oven chamber 60 to a temperature substantially above the austenitizing temperature of the steel in question in order to provide these with a crystalline structure of austenite. In this stage I, the transverse elements 32 are typically placed in a carbon containing gas atmosphere, for example in the form of nitrogen mixed with methane, in order to prevent a depletion of carbon from a surface layer of the transverse elements 32 to the gas atmosphere. In stage II the batch of transverse elements 32 are quenched, i.e. are rapidly cooled from the austenitizing temperature to a quenching temperature, to form a (meta-stable) microstructure largely composed of supersaturated martensitic crystals. In this stage II, the cooling of the transverse elements 32 is typically realized by immersing these in an oil bath 70 oil bath 70 that is typically maintained at temperature of between 80 and 120 degrees Celsius. Thereafter, in stage III, the batch of transverse elements 32 are re-heated in an oven chamber 80, to increase the ductility and toughness thereof. The temperature applied in this stage III is much lower than that in stage I, e.g. is around 200 degrees Celsius, such that it can take place without any protective atmosphere, i.e. in air.

In figure 4, the temperature T32s of the transverse element 32 is plotted as a function of time t during the course of the quench hardening heat treatment, i.e. during the above-mentioned three stages I, II, III. It is noted that figure 4 (and figure 5 hereinafter) solely serves to schematically illustrate the principles underlying the present disclosure, but the shown graph does not accurately reflect either the temperature applied in or the duration of the said stages I, II, III.

On the temperature y-axis of figure 4 (and figure 5 hereinafter) five values are specifically indicated, namely the starting or room temperature Tr, the quenching temperature Tq of the oil bath 70, the tempering temperature Tt of the tempering oven chamber 80, the ferrite to austenite phase transformation temperature Tp and the austenitizing temperature Ta of the austenitizing oven chamber 60. Obviously, during the various heating and/or cooling phases in the heat treatment there exists a time delay between the outer surface of the transverse element 32 reaching a certain temperature and the core material thereof reaching that same temperature, in particular in case the transverse elements 32 are piled into a heat treatment basket as is convention. In figure 4 the dashed line plots the temperature T32m of a transverse element 32 located in the middle of the pile or stack of transverse elements 32 contained in the heat treatment basket. Of course, also the core material of the transverse elements 32 that are located in the middle of such pile must be austenitized and a sufficient process time must thus be allowed for this. As a result, some transverse elements 32 of the batch are heated for a considerably longer time period than others. According to the present disclosure this particular phenomenon reduces the fatigue strength of the transverse elements 32, at least on average. In particular, the transverse elements 32 that remain at the highest temperate the longest are found to suffer in this respect.

According to the present disclosure and as illustrated in figure 5, the temperature profile of the quench hardening heat treatment can be modified to reduce the time that the transverse elements 32 are heated to above austenite phase transformation temperature Tp, at least on average. Hereto, the austenitizing stage I is preceded by a preheating stage P, wherein the transverse elements 32 are heated to a temperature close to, however, still below the ferrite to austenite phase formation temperature Tp of the steel in question. When the temperature of the transverse elements 32 is subsequently raised further in the austenitizing stage I, the still required temperature increase is small and the said phase transformation occurs quickly throughout the pile of transverse elements 32. As a result, the dissolution of iron carbide particles (e.g. Fe₃C, FeₓCr_{y}C), which normally occurs to a considerable extent in austenitizing, is reduced to a minimum, whereby fatigue strength of the transverse elements could be improved.

A practical value for the temperature applied in the preheating stage P, i.e. of the an oven chamber 60 wherein the transverse elements 32 are placed, is 25 degrees Celsius below the ferrite to austenite phase formation temperature Tp of the steel in question. Furthermore, the temperature applied in the subsequent austenitizing stage I can then remain relatively low in comparison with the conventionally applied austenitizing temperatures. A practical value for the temperature applied in the subsequent austenitizing stage I, i.e. of the oven chamber 60 wherein the transverse elements 32 are placed, is 75 degrees Celsius above the ferrite to austenite phase formation temperature Tp of the steel in question.

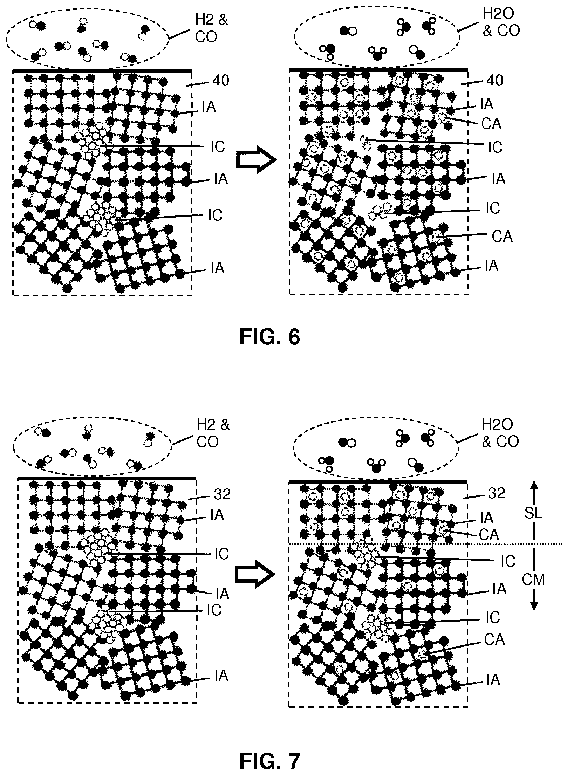

In the art of the heat treatment of steel, it is also known to include an excess of the carbon content of the gas atmosphere in the oven chamber 60 relative to the carbon content of the steel, during the austenitizing stage I, so called carburizing. Hereby, a surface layer of a steel work product 40 is enriched with carbon atoms, which increases the surface hardness that is attainable after quenching and tempering and which typically improves the wear resistance thereof improves. This latter carburizing process is graphically illustrated in figure 6 by way of example and based on carbon monoxide gas as the source of carbon.

The left side of figure 6 reflects the conditions at start of such process: carbon-monoxide molecules CO, represented by the pairs of black and white dots, are present in the gas atmosphere and crystals of iron atoms IA, represented by the solitary black dots, and iron-carbide particles IC, represented by the assembly of white dots, constitute the general crystal structure of the work product 40.

The conditions towards the end of the carburizing process are indicated on right side of figure 6. From figure 6 it appears that in the carburizing process at least some of the carbon-monoxide gas molecules CO present have decomposed into carbon and oxygen, whereof the carbon atoms CA enter into and become part of the microstructure of a work product 40 and whereof the oxygen atoms combine with hydrogen gas molecules to form water vapor H2O, represented by the triplets of two white and one black dots. Furthermore, the iron-carbide particles IC gradually have largely dissolved, whereby additional carbon atoms CA are released into the microstructure of the work product 40. Of course, by the application of heat and the passing of time in the carburizing process, also the crystalline structure wherein the iron atoms IA of the work product 40 are arranged has changed from ferrite to austenite, however, this particular aspect is not reflected in figure 6.

When the thus treated work product 40 is subsequently quenched, the carbon atoms are captured as interstitials in the supersaturated martensitic crystals. Hereby the hardness and wear resistance of the work product 40, in particular of the outer surface(s) thereof, is increased considerably, however, also is its brittleness, which makes the work product 40 unsuitable for applications requiring a considerable fatigue strength as well, such as the transverse element 32 of the drive belt 3.

According to the present disclosure, the above known carburizing process can unexpectedly be adapted in such a manner that it does become suitable for transverse elements 32, even to the extent that the fatigue strength thereof is increased rather than decreased. In particular according to the present disclosure, the dissolution of the iron carbides in the bulk material of the transverse element 32 is suppressed; such that a small but notional gradient in the concentration of dissolved carbon is realized from the surface of the transverse elements 32 towards the bulk or core material thereof. As a result of such dissolved carbon concentration gradient a compressive residual stress is realized in the surface material of the transverse elements 32, whereby the initiation of a fatigue fracture from a surface defect is suppressed. Furthermore, such concentration gradient of dissolved carbon effects a change in the material hardness of the transverse element 32 from a higher value at or near the surface thereof to a lower value at its core, which can be measured relatively easily.

The novel set-up of the carburizing process in accordance with the present disclosure is illustrated in figure 7. The left side of figure 7 corresponds to that of figure 6 and reflects the conditions at start of the carburizing process. However, in accordance with the present disclosure, carburizing is carried out in such a manner that during the carburizing process the dissolution of the iron carbide particles IC is reduced relative to conventional carburizing, as illustrated on the right side of figure 7. By this measure and by the introduction of carbon atoms CA from the gas atmosphere into a surface layer SL of the transverse elements 32, the said carbon concentration gradient is created from a higher concentration of carbon atoms in the said surface layer SL to a lower concentration of carbon atoms in the core material CM thereof. According to the present disclosure, by such gradient, the surface material of the transverse element 32 is compressively stressed, whereby its fatigue strength is favorably increased. In particular, those parts of the transverse element 32 that are not (or at least to a lesser extend as compared to other parts thereof) stone tumbled will benefit from such improvement.

The present disclosure, in addition to the entirety of the preceding description and all details of the accompanying figures, also concerns and includes all the features of the appended set of claims. Bracketed references in the claims do not limit the scope thereof, but are merely provided as non-binding examples of the respective features. The claimed features can be applied separately in a given product or a given process, as the case may be, but it is also possible to apply any combination of two or more of such features therein.

The invention(s) represented by the present disclosure is (are) not limited to the embodiments and/or the examples that are explicitly mentioned herein, but also encompasses amendments, modifications and practical applications thereof, in particular those that lie within reach of the person skilled in the relevant art.

## Claims

1. A method for the manufacture of transverse elements (32) made from steel for a drive belt (3) with an endless tensile element (31) and with a number of transverse elements (32) mounted on the endless tensile element (31), wherein the transverse elements (32) are quench hardened by placing several hundred to several thousand thereof in a heat treatment basket, by austenitizing these through the heating thereof to above a ferrite/austenite-transformation temperature (Tp) of the steel concerned and by subsequently quenching these through the cooling thereof to a quenching temperature (Tq), **characterized in that** prior to austenitizing the transverse elements (32), the heat treatment basket with the transverse elements (32) in it is preheated to a temperature below the said ferrite/austenite-transformation temperature (Tp).

2. The manufacturing method according to claim 1, **characterized in that** the heat treatment basket with the transverse elements (32) in it is preheated to a temperature above the quenching temperature (Tq).

3. The manufacturing method according to claim 1, **characterized in that** the heat treatment basket with the transverse elements (32) in it is preheated to a temperature in the range between 25 and 100 degrees Centigrade below the said ferrite/austenite-transformation temperature (Tp) and **in that** the transverse elements (32) are subsequently austenitized at a temperature in the range between 20 and 75 degrees Centigrade above the said ferrite/austenite-transformation temperature (Tp).

4. The manufacturing method according to a preceding claim, **characterized in that** the steel of the transverse elements (32) contains at least 0.6% by weight to at most 1.2% by weight carbon.

5. The manufacturing method according to a preceding claim, **characterized in that** the austenitizing of the transverse elements (32) occurs in a gas atmosphere with an excess of carbon relative to the carbon content in % by weight of the transverse elements (32).

## Patentansprüche

1. Verfahren zur Herstellung von aus Stahl hergestellten Querelementen (32) für einen Antriebsriemen (3) mit einem Endloszugelement (31) und mit einer Anzahl von Querelementen (32), die an dem Endloszugelement (31) angebracht sind, wobei die Querelemente (32) durch Platzieren mehrerer Hundert bis mehrerer Tausend davon in einem Wärmebehandlungskorb abschreckgehärtet werden, indem diese durch ihre Erwärmung auf über einer Ferrit-/Austenit-Umwandlungstemperatur (Tp) des betreffenden Stahls austenitisiert werden und indem diese anschließend durch ihre Abkühlung auf eine Abschrecktemperatur (Tq) abgeschreckt werden, **dadurch gekennzeichnet, dass** vor dem Austenitisieren der Querelemente (32) der Wärmebehandlungskorb mit den Querelementen (32) darin auf eine Temperatur unter der Ferrit-/Austenit-Umwandlungstemperatur (Tp) vorgewärmt wird.

2. Herstellungsverfahren nach Anspruch 1, **dadurch gekennzeichnet, dass** der Wärmebehandlungskorb mit den Querelementen (32) darin auf eine Temperatur über der Abschrecktemperatur (Tq) vorgewärmt wird.

3. Herstellungsverfahren nach Anspruch 1, **dadurch gekennzeichnet, dass** der Wärmebehandlungskorb mit den Querelementen (32) darin auf eine Temperatur im Bereich zwischen 25 und 100 Grad Celsius unter der Ferrit-/Austenit-Umwandlungstemperatur (Tp) vorgewärmt wird und dass die Querelemente (32) anschließend bei einer Temperatur im Bereich zwischen 20 und 75 Grad Celsius über der Ferrit-/Austenit-Umwandlungstemperatur (Tp) austenitisiert werden.

4. Herstellungsverfahren nach einem vorhergehenden Anspruch, **dadurch gekennzeichnet, dass** der Stahl der Querelemente (32) mindestens 0,6-Gew.-% bis höchstens 1,2 Gew.-% Kohlenstoff enthält.

5. Herstellungsverfahren nach einem vorhergehenden Anspruch, **dadurch gekennzeichnet, dass** das Austenitisieren der Querelemente (32) in einer Gasatmosphäre mit einem Kohlenstoffüberschuss bezüglich des Kohlenstoffgehalts in Gew.-% der Querelemente (32) erfolgt.

## Revendications

1. Procédé pour la fabrication d'éléments transversaux (32) composés d'acier pour une courroie d'entraînement (3) dotée d'un élément de traction sans fin (31) et dotée d'un nombre d'éléments transversaux (32) montés sur l'élément de traction sans fin (31), les éléments transversaux (32) étant durcis par trempe en plaçant plusieurs centaines ou plusieurs milliers de ceux-ci dans un panier de traitement thermique, en effectuant une austénisation de ceux-ci par le biais du chauffage de ceux-ci à une température de transformation (Tp) ferrite/austénite de l'acier concerné et en effectuant subséquemment une trempe de ceux-ci par le biais du refroidissement de ceux-ci à une température de trempe (Tq), **caractérisé en ce qu'**avant d'effectuer l'austénisation des éléments transversaux (32), le panier de traitement thermique comportant les éléments transversaux (32) dans celui-ci est préchauffé à une température inférieure à ladite température de transformation (Tp) ferrite/austénite.

2. Procédé de fabrication selon la revendication 1, **caractérisé en ce que** le panier de traitement thermique comportant les éléments transversaux (32) dans celui-ci est préchauffé à une température supérieure à la température de trempe (Tq).

3. Procédé de fabrication selon la revendication 1, **caractérisé en ce que** le panier de traitement thermique comportant les éléments transversaux (32) dans celui-ci est préchauffé à une température dans la plage entre 25 et 100 degrés Centigrade au-dessous de ladite température de transformation (Tp) ferrite/austénite et **en ce que** les éléments transversaux (32) sont subséquemment austénitisés à une température dans la plage entre 20 et 75 degrés Centigrade au-dessus de ladite température de transformation (Tp) ferrite/austénite.

4. Procédé de fabrication selon une revendication précédente, **caractérisé en ce que** l'acier des éléments transversaux (32) contient au moins 0,6 % en poids à au plus 1,2 % en poids de carbone.

5. Procédé de fabrication selon une revendication précédente, **caractérisé en ce que** l'austénisation des éléments transversaux (32) a lieu dans une atmosphère de gaz avec un excès de carbone par rapport à la teneur en carbone en % en poids des éléments transversaux (32).
